# EUROPÄISCHE PATENTSCHRIFT

(11) **EP 0 656 489 B1**
(45) Veröffentlichungstag und Bekanntmachung des Hinweises auf die Patenterteilung: **08.01.1997**
(21) Anmeldenummer: 94117492.2
(22) Anmeldetag: 05.11.1994
(51) Int. Cl.: F16H 21/18, B26B 19/28

(54) **Vorrichtung zur Umwandlung einer Drehbewegung mittels eines Exzenters in eine oszillierende Bewegung**
Device for transforming a rotation by means of an eccentric to oszillation
Dispositif pour transformer une rotation au moyen d'un excentrique en un mouvement oscillant

(30) Priorität: 04.12.1993 DE 4341392
(43) Veröffentlichungstag der Anmeldung: 07.06.1995
(73) Patentinhaber: Braun Aktiengesellschaft, 60326 Frankfurt am Main (DE)
(72) Erfinder: Wolf, Jürgen, D-65830 Kriftel (DE)

(56) Entgegenhaltungen:
- DE-A- 2 429 539
- DE-A- 3 631 120
- PATENT ABSTRACTS OF JAPAN vol. 16, no. 299 (M-1274) 2. Juli 1992 & JP-A-04 082 586 (ARAKI MASAKATSU)

## Beschreibung

Die Erfindung betrifft eine Vorrichtung zur Umwandlung der Drehbewegung eines von einer Motorwelle angetriebenen Exzenters in eine parallel zu einer ersten Richtung (y-y') hin- und hergehende Bewegung nach dem Oberbegriff des Patentanspruchs 1.

Solche Vorrichtungen zur Umwandlung der Drehbewegung eines Exzenters in eine hin- und hergehende Bewegung werden in zahlreichen Geräten, insbesondere in elektrisch betriebenen Kleingeräten eingesetzt. Übliche Anwendungen sind die Erzeugung der Hin- und Herbewegung eines Messerblockes in einem Rasierer oder die translatorische Bewegung der Zahnbürste einer Zahnputzvorrichtung. Die Umwandlungsvorrichtung ist dabei mittelbar oder unmittelbar mit einem Werkzeug wie einem Messerblock oder einem Zahnbürsten-Aufsatz verbunden.

Aus der JP-A-4-82586 (82586/92) ist eine Vorrichtung nach dem Oberbegriff des Patentanspruches 1 bekannt. Diese Vorrichtung weist eine starre Platte als Antriebselement auf, die mit dem Exzenter dadurch in Eingriff steht, daß ein am Exzenter angeordneter Antriebsstift in einen am Antriebselement angebrachten Gleitspalt eingreift.

Der Gleitspalt wird durch zwei parallel aber beabstandet voneinander angeordnete Gabelarme gebildet, deren jeweils erste Enden an dem Antriebselement befestigt sind und deren zweite Enden von der starren Platte wegweisen. Die ersten und zweiten Enden der Gabelarme liegen bei dieser Vorrichtung einander jeweils gegenüber und bilden einen einseitig offenen Gleitspalt. Die einander gegenüberliegenden Flächen der Gabelarme bilden die Begrenzungsfläche des Gleitspaltes, an der der Antriebsstift abrollt. Bei umlaufendem Exzenter wird das Antriebselement durch den Druck, den der Antriebsstift auf den ersten Gabelarm ausübt, in eine erste Richtung y ausgelenkt, nach der Bewegungsumkehr, bezogen auf die Richtung y, drückt der Antriebsstift den zweiten Gabelarm - und damit das Antriebselement - in die entgegengesetzte Richtung y', woraus die hin- und hergehende Bewegung des Antriebselementes parallel zu einer ersten Achse y-y' resultiert. Somit wird die kreisförmige Bewegung des Exzenters durch das Abrollen des Stiftes an den Begrenzungsflächen des Gleitspaltes übertragen und in eine translatorische Bewegung umgeformt.

Die Gabelarme dieser Umwandlungsvorrichtung sind so voneinander beabstandet, daß sie den Antriebsstift mit einer gewissen Vorspannung oder Klemmkraft zwischen sich aufnehmen. Die Gabelarme tragen hierzu biegeelastische Abschnitte - in der JA 4-82586 als Feder- und Pufferelemente bezeichnet - die an ihren Enden mit der starren Platte und dem freien Ende der Gabelarme verbunden sind. Die Klemmkraft wirkt am stärksten, wenn sich der Antriebsstift zwischen den beiden ersten Enden der Gabelarme befindet, sie ist am schwächsten, wenn er sich zwischen den beiden zweiten Enden der Gabelarme befindet.

Durch die Vorspannung, die durch die Gabelarme auf den Antriebsstift ausgeübt wird, soll verhindert werden, daß der rotierende Antriebsstift, meist nach längerer Gebrauchsdauer, zwischen den Gabelarmen Klappergeräusche verursacht, die durch das Abheben und das erneute Auftreffen des Antriebsstiftes auf die Begrenzungsfläche verursacht wird. Diese Klappergeräusche werden einerseits vom Benutzer des Gerätes als störend empfunden und erwecken andererseits den Eindruck, daß das Gerät defekt sei. Je weiter die Gabelarme voneinander beabstandet sind, das heißt, je weiter die Strecke ist, die der Antriebsstift bis zum Auftreffen auf die Begrenzungsfläche zurücklegt, desto lauter ist das Klappergeräusch.

Das Ausmaß der durch die Gabelarme ausgeübten Klemmkraft oder Vorspannung wird begrenzt durch die bei zu hoher Vorspannung erforderliche stark erhöhte Motorleistung. Eine deutlich erhöhte Vorspannung, das heißt, ein enger Abstand der Gabelarme, bewirkt ein außerordentliches Ansteigen der Verlustleistung durch die erhöhte Reibung des Antriebsstiftes zwischen den Gabelarmen, wie es insbesondere immer dann der Fall ist, wenn sich der Antriebsstift den ersten Enden der Gabelarme nähert und zwischen ihnen eingeschlossen wird.

Aus dem Vorstehenden ergibt sich, daß die entlang des Gleitspaltes von den zweiten Enden zu den ersten Enden der Gabelarme hin stark anwachsende Klemmkraft, das heißt, der ungleichmäßige Verlauf der Vorspannung, die die Gabelarme auf den Antriebsstift ausüben, besonders nachteilig wirkt, da der Abstand der Gabelarme zueinander nicht beliebig an den Antriebsstift anpaßbar ist, weil die überproportionale Klemmwirkung zwischen den ersten Enden der Gabelarme die Verlustleistung zu stark ansteigen läßt.

Die Feder- oder Pufferelemente, die in der JP-A- 4-82856 vorgeschlagen werden, um die Klappergeräusche des Antriebsstifes zwischen den Gabelarmen zu verringern, schaffen allenfalls zeitweilige Abhilfe, da das grundlegende Problem der fehlenden Anpassungsmöglichkeiten der Gabelarme an den Antriebsstift nicht gelöst wird. Überdies steht zu erwarten, daß sich diese zusätzlichen Elemente, die den Montageaufwand sehr erhöhen, sich nach längerer Betriebsdauer plastisch verformen und damit keine nachhaltige Beseitigung der Klappergeräusche ermöglichen.

Die vorstehende Beschreibung richtet sich auf eine Ausführungsform der Vorrichtung zur Umwandlung der Drehbewegung eines Exzenters in eine hin- und hergehende Bewegung, bei der der Gleitspalt am Antriebselement angeordnet und der Antriebsstift am Exzenter angeordnet ist. Die gleichen Überlegungen gelten jedoch auch für eine Ausführungsform der Erfindung, bei der der Gleitspalt am Exzenter und der Antriebsstift am Antriebselement angeordnet ist.

Aufgabe der vorliegenden Erfindung ist es, eine Umwandlungsvorrichtung der vorstehend beschriebenen Art in konstruktiv einfacher Weise so zu verbessern, daß Klappergeräusche zuverlässig vermieden werden, wobei auch die Reibungsverluste geringstmöglich sein sollen. Diese Aufgabe wird bei einer Vorrichtung der eingangs genannten Art mit den kennzeichnenden Merkmalen des Patentanspruchs 1 gelöst.

Die Erfindung betrifft eine Umwandlungsvorrichtung, bei der die kreisförmige Bewegung durch einen Antriebsstift, der in einen Gleitspalt eingreift, in eine translatorische Bewegung umgesetzt wird. Der Gleitspalt kann am Exzenter und der Antriebsstift am Antriebselement angeordnet sein oder der Antriebsstift kann am Exzenter und der Gleitspalt am Antriebselement angeordnet sein. Die nachstehenden Ausführungsbeispiele beziehen sich auf die letztere Ausführungsform.

Der Gleitspalt wird bei der erfindungsgemäßen Lösung nicht wie beim Stand der Technik durch starre Elemente begrenzt, sondern mindestens zwei biegeelastische Abschnitte, die die Funktion der Gabelarme übernehmen, an denen bei sich drehendem Exzenter der Antriebsstift anliegt, werden zumindestens abschnittsweise durch den Antriebsstift ausgelenkt. Ein erstes Ende eines jeden biegeelastischen Abschnittes ist nicht auslenkbar, doch nimmt die Auslenkbarkeit eines jeden biegeelastischen Abschnittes zu seinem entgegengesetzten zweiten Ende zu. Das erste Ende eines jeden biegeelastischen Abschnittes ist jeweils mit dem Antriebselement verbunden, während das zweite Ende frei auskragt. Die biegeelastischen Abschnitte sind vorzugsweise so angeordnet, daß ihre Biegesteifigkeit im Beschleunigungsbereich des Antriebsstiftes zunimmt, das heißt, ihre Auslenkbarkeit abnimmt.

Der Antriebsstift drückt bei rotierendem Exzenter jeweils auf einen der beiden biegeelastischen Abschnitte und hebt, indem er den biegeelastischen Abschnitt zumindest abschnittweise aus seiner ursprünglichen Position auslenkt, dessen Vorspannung zu einem gewissen Betrag auf. Dadurch, daß die beiden biegeelastischen Abschnitte so angeordnet sind, daß sich an den Enden des Gleitspaltes jeweils ein festes erstes und ein auslenkbares zweites Ende der biegeelastischen Abschnitte gegenüberliegen, üben die beiden biegeelastischen Abschnitte über die gesamte Länge des Gleitspaltes jeweils eine dem Betrag nach stark vergleichmäßigte, vorzugsweise nahezu gleichmäßige Klemmkraft oder Vorspannung auf den Antriebsstift aus.

Diese Anordnung der biegeelastischen Abschnitte ermöglicht entweder bei unveränderter Vorspannung eine deutlich reduzierte Motorleistung, da die beim Stand der Technik zwischen den beiden ersten Enden der Gabelarme maximal zu überwindende Klemmkraft eine unerwünscht hohe Verlustleistung erzeugt. Alternativ ermöglicht die Erfindung, den Abstand zwischen biegeelastischem Abschnitt und Antriebsstift bei sich drehendem Exzenter so weit zu minimieren, daß Klappergeräusche, die umso lauter werden, je weiter der Abstand zwischen Antriebsstift und Begrenzungsfläche ist, nahezu vollständig beseitigt werden. Damit wird die Umwandlungsvorrichtung wesentlich verbessert, weil die Motorleistung geringer dimensioniert und/oder Klappergeräusche vermieden werden.

Jeder der biegeelastischen Abschnitte ist mit einem ersten Ende vorzugsweise an einem Ausschnitt des Antriebselementes durch geeignete Befestigungsmittel, wie beispielsweise Schrauben, befestigt oder integral an diesem angeformt, so daß das zweite Ende des jeweiligen Abschnittes frei in den Ausschnitt ragt. Die ersten Enden der biegeelastischen Abschnitte sind jeweils auf entgegengesetzten Seiten des Ausschnittes im Antriebselement angeordnet und die biegeelastischen Abschnitte erstrecken sich entgegengesetzt parallel zueinander in einem vorbestimmten Abstand, der, wie oben beschrieben, so auf den Durchmesser des Antriebsstiftes abgestimmt ist, daß beide Abschnitte mit einer solchen Vorspannung an dem Antriebsstift anliegen, daß die Reibungskräfte, die zwischen Antriebsstift und biegeelastischen Abschnitten auftreten, über die gesamte Länge des Gleitspaltes so weit wie möglich vergleichmäßigt und so ausgelegt sind, daß der Exzenter mit geringer Motorleistung betrieben werden kann. Neben dem Vorteil, daß die Vorspannung gegenüber dem Stand der Technik insgesamt niedriger gewählt werden kann, hat diese Anordnung den Vorteil, daß die biegeelastischen Abschnitte enger am Antriebsstift anliegen und daß Klappergeräusche daher vermieden werden.

Der Ausschnitt, in den hinein sich die biegeelastischen Abschnitte erstrecken, kann an beliebigen Stellen des in der Regel plattenförmigen Antriebselementes angeordnet sein. Je nach den Anforderungen der jeweiligen Gerätekonstruktion kann der Ausschnitt beispielsweise endständig oder mittig am Antriebselement angeordnet sein. Insbesondere bei endständiger Anordnung der biegeelastischen Abschnitte bietet es sich an, daß die beiden biegeelastischen Abschnitte einen einseitig offenen Gleitspalt bilden, der die Montage von Antriebsstift und Antriebselement erleichtert.

Die biegeelastischen Abschnitte sind entweder als separates Bauteil ausgeführt, das bei der Montage an dem Antriebselement befestigt wird, oder sie werden, vorzugsweise dann, wenn das Antriebselement aus Kunststoff gefertigt wird, integral mit dem Antriebselement hergestellt. Das Antriebselement und die biegeelastischen Abschnitte können aus demselben Material, gegebenenfalls in einem Arbeitsgang, hergestellt werden. Die biegeelastischen Abschnitte können aus jedem ausreichend biegeelastischen Material hergestellt sein, bevorzugt werden jedoch Metall oder Kunststoff. Die biegeelastischen Abschnitte können je nach den Erfordernissen der Gerätekonstruktion blatt- oder stabförmig ausgebildet sein.

Das Antriebselement, durch das die Bewegungsumkehr bewirkt wird, muß mindestens ein starres Bauteil zur Übertragung der Bewegung aufweisen. Dieses starre Teil ist meist als plattenförmiges Bauteil ausgeführt, an dem die biegeelastischen Abschnitte sowie gegebenenfalls ein Abtrieb für ein Werkzeug, wie beispielsweise ein Untermesser eines Rasierers oder ein Zahnbürstenaufsatz, und eine Halterung für das Antriebselement an dem Gehäuse des jeweiligen Gerätes, in dem die Umwandlungsvorrichtung eingesetzt wird, angeordnet sind. Falls es die Stabilität der Umwandlungsvorrichtung erfordert, kann das starre Bauteil des Antriebselementes auch als Rahmenkonstruktion ausgeführt sein. Im Falle, daß das starre Bauteil des Antriebselementes als Rahmenkonstruktion (Antriebsrahmen) ausgeführt ist, können die biegeelastischen Abschnitte an einem Antriebsarm angeordnet sein, der am Antriebsrahmen befestigt ist.

Die biegeelastischen Abschnitte sind gemäß einer weiteren Ausführungsform in der Ebene des Antriebselementes ausgeführt, so daß das Antriebselement oder der Antriebsarm seine plattenförmige Gestalt beibehält.

Gemäß einer anderen Ausführungsform erstrecken sich die biegeelastischen Abschnitte senkrecht von dem Antriebselement oder -arm weg beziehungsweise zum Antriebselement oder -arm hin. Dabei ist beispielsweise der erste biegeelastische Abschnitt mit seinem ersten Ende am Antriebselement angeformt und das zweite Ende erstreckt sich vom Antriebselement weg. Parallel zu dem ersten biegeelastischen Abschnitt erstreckt sich ein starres Wandelement, an dessen freiem, das heißt vom Antriebselement abgewandten Ende das erste Ende des zweiten biegeelastischen Abschnittes angeformt ist. Der zweite biegeelastische Abschnitt erstreckt sich parallel unmittelbar gegenüber dem ersten biegeelastischen Abschnitt, wobei das freie, zweite Ende dieses zweiten biegeelastischen Abschnittes zum Antriebselement hinweist. Dadurch entsteht zwischen erstem und zweitem biegeelastischen Abschnitt ein einseitig offener Gleitspalt, in den der Antriebsstift eingreifen kann.

Die erfindungsgemäße Lösung, den Gleitspalt durch mindestens zwei biegeelastische Abschnitte zu begrenzen, ist einfach auszuführen, da die biegeelastischen Abschnitte entweder integral am Antriebselement ausgebildet werden können oder beispielsweise durch Steck- oder Schraubverbindungen einfach montiert werden können. Zusätzliche Bauteile wie Puffer oder Dämpfungselemente fallen nicht an. Auch die Montage von Antriebselement und Exzenter ist einfach, da der Antriebsstift ohne besonderen Aufwand in den Gleitspalt eingeführt werden kann. Die biegeelastischen Abschnitte ermöglichen eine Produktion, die ausreichende Toleranzen erlaubt, da die Vorspannung, die durch den Abstand der biegeelastischen Abschnitte zueinander vorgegeben wird, im Rahmen der Fertigungstoleranzen ohne weiteres variabel ist und kleinere Schwankungen im Abstand, wie beispielsweise Fertigungstoleranzen, der beiden biegeelastischen Abschnitte zueinander daher keinen Einfluß auf die Tauglichkeit der Umwandlungsvorrichtung haben.

Das Antriebselement ist gemäß einer besonders bevorzugten Ausführungsform Bestandteil einer Schwingbrücke, insbesondere einer Schwingbrücke mit zwei elastischen Schenkeln, zwischen denen mindestens ein starres, plattenförmiges oder als Rahmenkonstruktion ausgeführtes Grundelement angeordnet ist, und wobei das Antriebselement mit dem Grundelement verbunden ist. Das Antriebselement kann durch Befestigungsmittel am Grundelement befestigt sein oder aber integral am Grundelement angeformt sein. Die elastischen Schenkel der Schwingbrücke, beispielsweise als Filmscharniere ausgebildet, dienen zur Lagerung und Befestigung der Schwingbrücke am Gehäuse des jeweiligen Gerätes. Das Antriebselement kann an jeder beliebigen Stelle der Schwingbrücke angeordnet sein, mittig oder endständig, je nach den Erfordernissen der Konstruktion des Gerätes. So kann das Antriebselement beispielsweise in der Art eines Antriebsarmes der Schwingbrücke einseitig an einem Ende des Grundelementes außerhalb der elastischen Schenkel angeordnet sein.

Gemäß einer besonders bevorzugten, verbesserten Ausführungsform der Erfindung werden Klappergeräusche nach längerer Gebrauchsdauer besonders dadurch vermieden bzw. reduziert, daß die biegeelastischen Abschnitte durch Federelemente abgestützt sind. Die Federelemente sind bevorzugt in den Bereichen maximaler Auslenkung zwischen den biegeelastischen Abschnitten und dem Antriebselement angeordnet.

Es ist erfindungsgemäß ohne weiteres möglich, falls erforderlich, mehrere Antriebselemente miteinander zu koppeln, beispielsweise, wenn eine mehrteilige Schwingbrücke, deren verschiedene Teile gegenläufig zueinander ausgelenkt werden, betrieben werden sollen. So ist es beispielsweise denkbar, mehrere, auf verschiedenen, hintereinandergeschalteten Exzenterscheiben angeordnete Antriebsstifte in jeweils korrespondierend zu den Antriebsstiften angeordneten Gleitspalten rotieren zu lassen.

Nachstehend wird die Erfindung an einigen Ausführungsbeispielen detailliert erläutert. Es zeigen:
- Fig. 1: eine Ansicht einer Umwandlungsvorrichtung gemäß einer ersten Ausführungsform.
- Fig. 2: eine Ansicht einer weiteren Ausführungsform der erfindungsgemäßen Umwandlungsvorrichtung.
- Fig. 3: eine Ansicht einer dritten Ausführungsform der erfindungsgemäßen Umwandlungsvorrichtung.
- Fig. 4: einen Schnitt durch einen Rasierer mit einer Schwingbrücke, an der ein Antriebsarm mit einem biegeelastischen Element angeordnet ist.

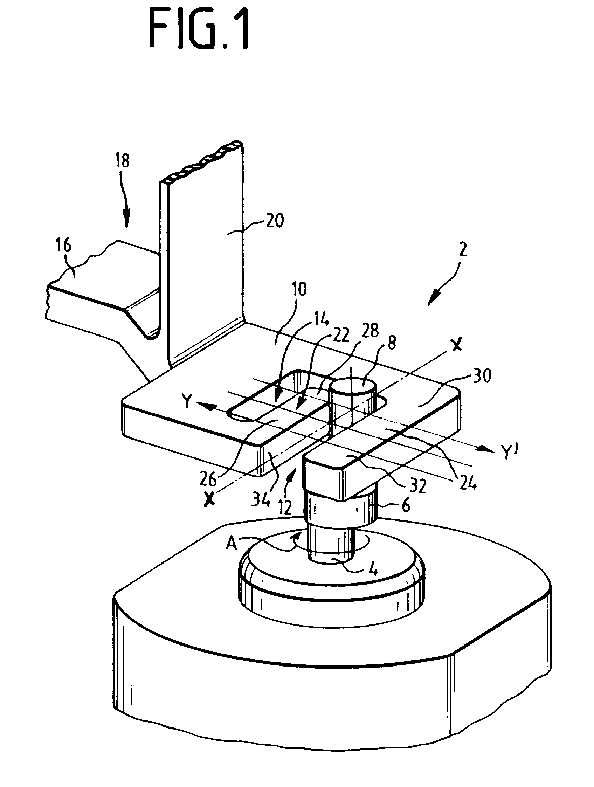

Nachstehend wird die erfindungsgemäße Umwandlungsvorrichtung zunächst anhand der Fig. 1 erläutert. In Fig. 1 ist eine Vorrichtung 2 zur Umwandlung der Drehbewegung A eines von einer Motorwelle 4 angetriebenen Exzenters 6 in eine hin- und hergehende Bewegung parallel zu einer ersten Richtung y-y' dargestellt. An der Exzenterscheibe 6 ist in Verlängerung der Motorwelle ein Antriebsstift 8 befestigt, der in einen in dem Antriebselement 10 ausgeformten Gleitspalt 12 hineinragt.

Das Antriebselement 10 ist eine Platte, beispielsweise aus Kunststoff oder aus Metall, die einen Ausschnitt 14 aufweist und ist einseitig als Antriebsarm an das starre Grundelement 16 einer Schwingbrücke 18 angeformt. Die Schwingbrücke ist durch das Filmscharnier 20 aufgehängt. Eine solche Schwingbrücke 18 ist üblicherweise Bestandteil eines mit einem Elektromotor betriebenen Kleingerätes, wie beispielsweise eines Rasierers oder einer Zahnputzvorrichtung.

An dem Antriebselement sind weiterhin zwei biegeelastische Abschnitte 22 und 24 angeformt. Der erste Abschnitt 22 ist mit seinem ersten Ende 26 am Antriebselement angeformt und ragt mit seinem freien zweiten Ende 28 in den Ausschnitt 14 hinein. Auf der entgegengesetzten Seite des Ausschnitts 14 ist das erste Ende 30 des zweiten Abschnitts 24 an das Antriebselement 10 angeformt. Das zweite Ende 32 dieses Abschnitts 24 begrenzt den Ausschnitt 14. Die beiden biegeelastischen Abschnitte 22 und 24 erstrecken sich entgegengesetzt parallel zueinander, so daß jeweils das erste Ende des einen Abschnitts dem zweiten Ende des anderen Abschnitts gegenüberliegt. So liegt das erste Ende 26 des Abschnitts 22 dem zweiten Ende 32 des zweiten Abschnitts 24 und das erste Ende 30 des zweiten Abschnitts 24 dem zweiten Ende 28 des ersten Abschnitts 22 gegenüber. Durch diese Anordnung der biegeelastischen Abschnitte 22 und 24 entsteht ein einseitig offener Gleitspalt 12, durch dessen offenes Ende der Antriebsstift 8 bei der Montage eingesetzt werden kann.

Die einander gegenüberliegenden Flächen der beiden Abschnitte 22 und 24 werden als Begrenzungsfläche 34 bezeichnet und der Raum, den die Begrenzungsfläche 34 begrenzt, wird als Gleitspalt 12 bezeichnet. Der Abstand der beiden Abschnitte 22 und 24 zueinander ist kleiner als der Durchmesser des Antriebsstiftes 8, so daß der Antriebsstift mit einer gewissen Vorspannung zwischen den biegeelastischen Abschnitten 22 und 24 eingespannt ist. Die Länge des Gleitspaltes 12 in der Richtung seiner Längsachse x-x beträgt mindestens das Doppelte des Abstandes des Antriebsstiftes 8 von der Achse der Motorwelle 4. Damit ist sichergestellt, daß der Antriebsstift in jeder Stellung des Exzenters im Gleitspalt 12 von den Abschnitten 22 und 24 geführt wird.

Der Antriebsstift 8 beschreibt eine kreisförmige Bewegung, der das Antriebselement folgt, indem der Antriebsstift 8, der an der Begrenzungsfläche 34 abrollt, Druck auf das Antriebselement ausübt, wodurch diese kreisförmige Bewegung in eine translatorische, hin- und hergehende Bewegung umgeformt wird. Neben der translatorischen Bewegung des Antriebselementes werden die Abschnitte 22 und 24 durch die Kreisbewegung des Antriebsstiftes zumindest abschnittweise ausgelenkt. Der Antriebsstift 8 wirkt durch seine Kreisbewegung der Vorspannung entgegen, die durch die biegeelastischen Abschnitte auf ihn ausgeübt wird. Die Vorspannung wird zumindest teilweise aufgehoben, indem der Antriebsstift die biegeelastischen Abschnitte 22 und 24 zumindest abschnittsweise aus ihrer ursprünglichen Position auslenkt.

Durch die erfindungsgemäße Ausgestaltung des Gleitspaltes 12 ist es möglich, die durch die biegeelastischen Abschnitte 22 und 24 auf den Antriebsstift 8 aufgebrachte Vorspannung und damit die Reibung zwischen Stift und biegeelastischem Element über den gesamten Gleitweg, das heißt über die gesamte Umlaufbahn des Antriebsstiftes 8, zu minimieren und weitgehend zu vergleichmäßigen. Neben der Minimierung der Vorspannung wird dadurch erreicht, daß die biegeelastischen Abschnitte 22 und 24 enger am Antriebsstift anliegen und daß dadurch Klappergeräusche vermieden werden.

Nachstehend werden weitere Ausführungsformen der erfindungsgemäßen Umwandlungsvorrichtung dargestellt. Gleiche Bauteile werden dabei mit den gleichen Bezugszeichen benannt.

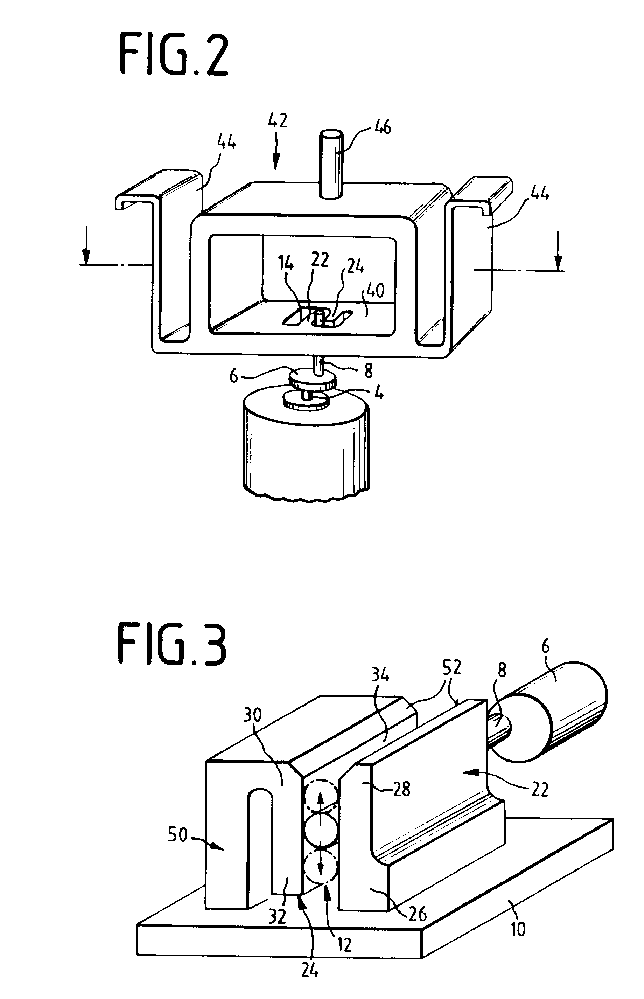

In Fig. 2 ist eine zweite Ausführungsform der erfindungsgemäßen Umwandlungsvorrichtung dargestellt. Das Antriebselement ist integraler Bestandteil des starren, als Rahmenkonstruktion ausgeführten Grundelements 40 einer Schwingbrücke 42. Die Schwingbrücke wird durch zwei Filmscharniere 44 in einem Gerät beweglich gelagert. An der Rahmenkonstruktion ist an der dem Exzenter abgewandten Fläche ein Abtrieb 46 für ein Werkzeug angeordnet.

In der dem Exzenter 6 gegenüberliegenden Fläche der Rahmenkonstruktion wurde für das integrierte Antriebselement ein Ausschnitt 14 ausgespart. In den Ausschnitt 14 erstrecken sich von entgegengesetzten Seiten zwei parallel beabstandet zueinander angeordnete biegeelastische Abschnitte 22 und 24. Die zweiten Enden dieser Abschnitte ragen jeweils frei in den Ausschnitt 14 hinein und sind durch den Antriebsstift 8 auslenkbar. Die beiden Abschnitte 22 und 24 bilden bei der abgebildeten Ausführungsform einen geschlossenen Gleitspalt 12, an dessen Begrenzungsflächen der Antriebsstift 8 auf seiner Kreisbahn abrollt.

Die in Fig. 2 dargestellte Ausführungsform ist besonders einfach zu fertigen und zu montieren. Sie ist auf ein Minimum an Bauteilen und Platzbedarf beschränkt. Fig. 3 zeigt eine weitere Ausführungsform der erfindungsgemäßen Umwandlungsvorrichtung, bei der sich die biegeelastischen Abschnitte 22, 24 aus der Fläche des Antriebselementes 10 heraus erstrecken. Der erste Abschnitt 22 ist mit seinem ersten Ende 26 auf dem Antriebselement 10 verankert und erstreckt sich senkrecht davon, so daß das zweite Ende 28 frei auskragt. Parallel beabstandet dazu erstreckt sich ein ebenfalls am Antriebselement verankertes, starres Wandelement 50 vom Antriebselement 10 weg. An dem frei auskragenden Ende dieses starren Wandelementes 50 ist das erste Ende 30 des zweiten biegeelastischen Abschnittes 24 befestigt. Der zweite Abschnitt 24 erstreckt sich zwischen dem starren Wandelement 50 und dem ersten biegeelastischen Abschnitt 22 zum Antriebselement 10 hin. Das zweite Ende 32 des zweiten Abschnitts 24 endet jedoch frei auskragend über dem Antriebselement 10. Der Gleitspalt 12 wird, wie auch bei vorstehend beschriebenen Ausführungsformen der Erfindung, durch die Abschnitte 22 und 24 als einseitig offener Gleitspalt 12 gebildet. Der Antriebsstift 8 ragt zwischen die beiden biegeelastischen Abschnitte 22 und 24 und wird auf seiner Kreisbahn, die durch das Antriebselement in eine hin- und hergehende Bewegung umgeformt wird, durch die beiden Abschnitte 22 und 24 auf der Begrenzungsfläche 34 in dem Gleitspalt 12 geführt.

Das starre Wandelement 50 und der zweite biegeelastische Abschnitt 24 können entweder aus verschiedenen Materialien (Metall und Kunststoff, verschiedene Kunststoffe oder Metalle) gebildet sein oder sie können aus demselben Material, aber beispielsweise in unterschiedlicher Materialstärke hergestellt sein.

Um das Einführen des Antriebsstiftes zu vereinfachen, sind am offenen Ende des Gleitspaltes an den biegeelastischen Abschnitten 22 und 24 jeweils abgeschrägte Führungsflächen 52 ausgebildet.

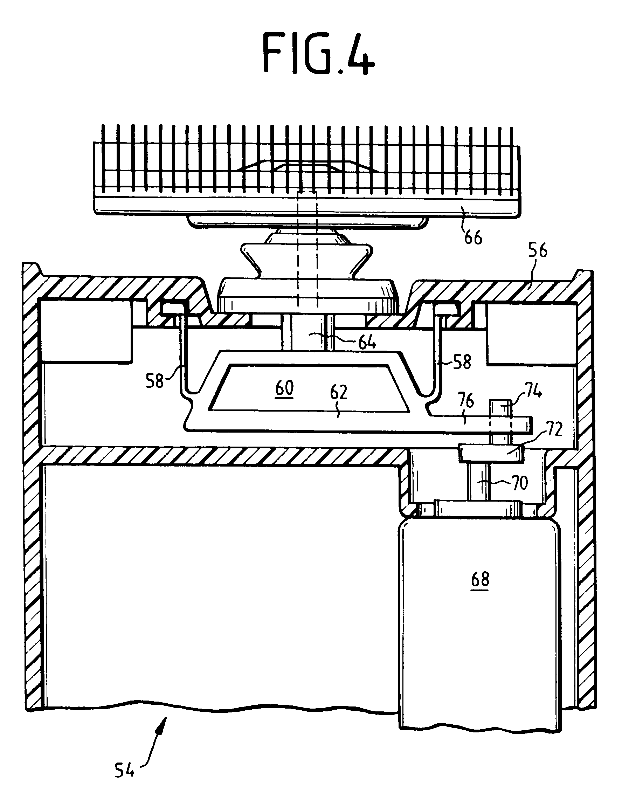

Fig. 4 zeigt einen Rasierer 54 mit einem Gehäuse 56, in dem über Filmscharniere 58 eine Schwingbrücke 60 beweglich gelagert ist. Die Schwingbrücke 60 weist als starres Grundelement einen Rahmen 62 auf, an dem ein Abtrieb 64 angeformt ist. Am Abtrieb 64 ist ein Untermesser 66 des Rasierers 54 befestigt. Weiter weist der Rasierer 54 einen elektrischen Motor 68 auf, an dessen Motorwelle 70 eine Exzenterscheibe 72 einen Antriebsstift 74 trägt, der achsparallel zur Motorwelle 70 ausgerichtet ist.

Exzenter 72 und Schwingbrücke 60 stehen miteinander im Eingriff, indem der Antriebsstift 74 mit einem biegeelastischen Element im Eingriff steht, das in einem am Rahmen 62 der Schwingbrücke 60 angeformten Antriebsarm 76 ausgebildet ist. Die Anordnung von Antriebsstift und biegeelastischem Element erfolgt wie in Fig. 1 dargestellt. Der Antriebsarm 76 ist außerhalb der Filmscharniere 58 angeordnet, da der Motor und damit auch der Exzenter seitlich im Gehäuse des Rasierers angeordnet sind. Aus Fig. 3 geht hervor, daß es auch ohne weiteres möglich ist, das biegeelastische Element mittig am Grundelement der Schwingbrücke anzuordnen, falls der Motor mittig im Gehäuse des Rasierers befestigt ist.

## Patentansprüche

1. Vorrichtung zur Umwandlung der Drehbewegung eines von einer Motorwelle (4) angetriebenen Exzenters (6) in eine parallel zu einer ersten Richtung (y-y') gerichteten hin- und hergehenden Bewegung mit einem Antriebselement (10), das die Kreisbewegung (A) des Exzenters (6) in eine translatorische Bewegung parallel zur ersten Richtung (y-y') umsetzt, indem Exzenter (6) und Antriebselement (10) durch einen Antriebsstift (8) und einen quer zur ersten Richtung (y-y') verlaufenden Gleitspalt (12) miteinander im Eingriff stehen, und mit einem mittelbar oder unmittelbar mit dem Antriebselement (10) koppelbaren Werkzeug, wie beispielsweise einem Schneidwerkzeug eines Rasierapparates oder einer Zahnbürste einer Zahnputzvorichtung, wobei der Gleitspalt (12) durch mindestens zwei biegeelastische Abschnitte (22, 24) begrenzt ist, und wobei der Antriebsstift (8) bei sich drehendem Exzenter (6) die biegeelastischen Abschnitte zumindest abschnittsweise auslenkt, dadurch gekennzeichnet, daß die biegeelastischen Abschnitte (22, 24) jeweils ein nicht auslenkbares erstes Ende (26, 30) und ein auslenkbares zweites Ende (28, 32) aufweisen, so daß die Auslenkbarkeit eines jeden biegeelastischen Abschnittes (22, 24) von dessen jeweiligem ersten Ende (26, 30) zu dessen jeweiligem zweiten Ende (28, 32) zunimmt, und daß die biegeelastischen Abschnitte (22, 24) in der Weise angeordnet sind, daß sich jeweils ein auslenkbares (28, 32) und ein nicht auslenkbares Ende (26, 30) gegenüberliegen.

2. Vorrichtung nach Anspruch 1, **dadurch gekennzeichnet,** daß die biegeelastischen Abschnitte (22, 24) jeweils stab- oder blattförmig ausgebildet sind und daß jeweils das erste Ende (26, 30) des biegeelastischen Abschnittes (22, 24) an dem Antriebselement (10) angeformt ist.

3. Vorrichtung nach Anspruch 2, **dadurch gekennzeichnet,** daß die biegeelastischen Abschnitte (22, 24) parallel zueinander ausgerichtet sind und daß sich die freien zweiten Enden (28, 32) der biegeelastischen Abschnitte (22, 24) in die jeweils entgegengesetzte Richtung erstrecken.

4. Vorrichtung nach einem der Ansprüche 1 bis 3, **dadurch gekennzeichnet** , daß der durch die biegeelastischen Abschnitte (22, 24) gebildete Gleitspalt (12) einseitig offen ist.

5. Vorrichtung nach einem der vorangehenden Ansprüche, **dadurch gekennzeichnet**, daß das Antriebselement (10) plattenförmig ausgebildet ist und daß die biegeelastischen Abschnitte in der Ebene des plattenförmigen Antriebselementes (10) angeordnet sind.

6. Vorrichtung nach Anspruch 5, **dadurch gekennzeichnet**, daß das plattenförmige Antriebselement (10) einen Ausschnitt (14) aufweist, in den von zwei jeweils entgegengesetzten Seiten des Ausschnittes jeweils der biegeelastische Abschnitt (22, 24) hineinragt, so daß die beiden biegeelastischen Abschnitte (22, 24) beabstandet voneinander und entgegengesetzt parallel zueinander angeordnet sind.

7. Vorrichtung nach Anspruch 6, **dadurch gekennzeichnet**, daß der Ausschnitt (14) an dem als Antriebsarm (76) ausgebildeten Antriebselement (10) angeordnet ist.

8. Vorrichtung nach einem der Ansprüche 1 bis 4, **dadurch gekennzeichnet**, daß sich die biegeelastischen Abschnitte (22, 24) aus der Ebene, die durch das Antriebselement (10) gebildet wird, heraus erstrecken.

9. Vorrichtung nach Anspruch 8, **dadurch gekennzeichnet,** daß in Längsrichtung (x-x) des Gleitspaltes (12) an dem Antriebselement der erste biegeelastische Abschnitt (22), der sich von dem Antriebselement (10) weg erstreckt, und ein parallel dazu ausgerichtetes, starres Wandelement (50) angeordnet sind, und daß sich an dem von dem Antriebselement (10) abgewandten Ende des starren Wandelements der sich parallel, aber beabstandet von dem Wandelement zum Antriebselement (10) hin ragende zweite biegeelastische Abschnitt (24) erstreckt, der dem ersten biegeelastischen Abschnitt (22) gegenüberliegt, so daß zwischen beiden biegeelastischen Abschnitten der Gleitspalt (12) gebildet wird.

10. Vorrichtung nach einem der Ansprüche 1 bis 9, **dadurch gekennzeichnet,** daß das Antriebselement (10) Bestandteil einer Schwingbrücke (18; 42; 60) ist.

11. Vorrichtung nach Anspruch 10, **dadurch gekennzeichnet**, daß die Schwingbrücke (18; 42; 60) durch mindestens zwei elastische Schenkel (20; 44; 58) und mindestens ein die elastischen Schenkel verbindendes starres Grundelement (16; 40; 62) gebildet ist und daß das Antriebselement (10) mit dem starren Grundelement (16; 40; 62) verbunden ist.

12. Vorrichtung nach Anspruch 11, **dadurch gekennzeichnet,** daß das Antriebselement (10) mittig zwischen den elastischen Schenkeln (20; 44) angeordnet ist.

13. Vorrichtung nach Anspruch 11, **dadurch gekennzeichnet,** daß das Antriebselement (10) einseitig an einem Ende des Grundelementes (62) außerhalb der elastischen Schenkel (58) angeordnet ist.

14. Vorrichtung nach einem der vorangehenden Ansprüche, **dadurch gekennzeichnet,** daß der oder die biegeelastischen Abschnitte durch ein Federelement unterstützt sind.

15. Vorrichtung nach einem der vorangehenden Ansprüche, **dadurch gekennzeichnet,** daß die biegeelastischen Abschnitte (22, 24) so ausgerichtet sind, daß die Biegesteifigkeit im Beschleunigungsbereich des Antriebsstiftes (8) zunimmt.

## Claims

1. A device for converting the rotary motion of an eccentric (6) driven by a motor shaft (4) into a reciprocating motion parallel to a first direction (y-y'), with a drive member (10) that converts the circular motion (A) of the eccentric (6) into a translational motion parallel to the first direction (y-y') by providing for relative engagement of the eccentric (6) and the drive member (10) by means of a drive pin (8) and a slide slot (12) extending transversely to the first direction (y-y'), and with an implement as, for example, a cutter of a shaving apparatus or a toothbrush of a dental cleansing device, which is adapted to be coupled to the drive member (10) directly or indirectly, with the slide slot (12) being bounded by at least two flexurally elastic portions (22, 24), and with the drive pin (8) deflecting the flexurally elastic portions at least in sections as the eccentric (6) rotates, **characterized in that** the flexurally elastic portions (22, 24) include each a non-deflectable first end (26, 30) and a deflectable second end (28, 32), so that the deflectability of each flexurally elastic portion (22, 24) increases progressively from the respective first end (26, 30) thereof to the respective second end (28, 32) thereof, and that the flexurally elastic portions (22, 24) are arranged such that a respective deflectable end (28, 32) lies opposite a respective non-deflectable end (26, 30).

2. A device as claimed in claim 1, **characterized in that** the flexurally elastic portions (22, 24) are each of a rod- or leaf-shaped configuration, and that the respective first end (26, 30) of the flexurally elastic portion (22, 24) is formed on the drive member (10).

3. A device as claimed in claim 2, **characterized in that** the flexurally elastic portions (22, 24) are aligned parallel to each other, and that the second free ends (28, 32) of the flexurally elastic portions (22, 24) (22, 24) extend into opposite directions.

4. A device as claimed in any one of the claims 1 to 3, **characterized in that** the slide slot (12) formed by the flexurally elastic portions (22, 24) has one end thereof open.

5. A device as claimed in any one of the preceding claims, **characterized in that** the drive member (10) is of a plate-shaped configuration, and that the flexurally elastic portions are arranged in the plane of the plate-shaped drive member (10).

6. A device as claimed in claim 5, **characterized in that** the plate-shaped drive member (10) includes a cutout (14) into which the respective flexurally elastic portion (22, 24) extends from opposite ends of the cutout, such that the two flexurally elastic portions (22, 24) are arranged at a relative distance and extend parallel to each other in opposite directions.

7. A device as claimed in claim 6, **characterized in that** the cutout (14) is provided on the drive member (10) configured as a drive arm (76).

8. A device as claimed in any one of the claims 1 to 4, **characterized in that** the flexurally elastic portions (22, 24) extend out of the plane formed by the drive member (10).

9. A device as claimed in claim 8, **characterized in that** the first flexurally elastic portion (22) extending away from the drive member (10) and a rigid wall member (50) aligned parallel thereto are provided on the drive member in the longitudinal direction (x-x) of the slide slot (12), and that at the end of the rigid wall member remote from the drive member (10) the second flexurally elastic portion (24) is provided which is parallel to, yet spaced from the wall member and extends in the direction of the drive member (10), said second portion lying opposite the first flexurally elastic portion (22), thus providing the slide slot (12) between said two flexurally elastic portions.

10. A device as claimed in any one of the claims 1 to 9, **characterized in that** the drive member (10) is a component part of an oscillator (18; 42; 60).

11. A device as claimed in claim 10, **characterized in that** the oscillator (18; 42; 60) is formed by at least two elastic legs (20; 44; 58) and at least one rigid basic member (16; 40; 62) connecting said elastic legs, and that the drive member (10) is connected with said rigid basic member (16; 40; 62).

12. A device as claimed in claim 11, **characterized in that** the drive member (10) is centrally arranged between the elastic legs (20; 44).

13. A device as claimed in claim 11, **characterized in that** the drive member (10) has one side thereof arranged at one end of the basic member (62) outside the elastic legs (58).

14. A device as claimed in any one of the preceding claims, **characterized in that** the flexurally elastic portion(s) is (are) supported by a spring means.

15. A device as claimed in any one of the preceding claims, **characterized in that** the flexurally elastic portions (22, 24) are aligned such that the flexural rigidity increases in the acceleration area of the drive pin (8).

## Revendications

1. Dispositif de transformation du mouvement de rotation d'un excentrique (6), entraîné par un arbre de moteur (4), en un mouvement de va-et-vient orienté parallèlement à une première direction (y-y'), comportant un élément d'entraînement (10) qui transforme le mouvement circulaire (A) de l'excentrique (6) en un mouvement de translation parallèle à la première direction (y-y'), du fait que l'excentrique (6) et l'élément d'entraînement (10) viennent en prise l'un avec l'autre par l'intermédiaire d'une broche d'entraînement (8) et d'une fente de coulissement (12) orientée perpendiculairement à la première direction (y-y'), et comportant un outil, comme par exemple un outil de coupe d'un rasoir ou une brosse à dents d'un appareil à brosser les dents, pouvant se coupler indirectement ou directement à l'élément d'entraînement (10), la fente de coulissement (12) étant limitée par au moins deux tronçons élastiques en flexion (22, 24), et la broche d'entraînement (8) déformant les tronçons élastiques en flexion, au moins tronçon par tronçon, lorsque l'excentrique (6) est entraîné en rotation, caractérisé en ce que chacun des tronçons élastiques en flexion (22, 24) présente une première extrémité non déformable (26, 30) et une seconde extrémité déformable (28, 32) de façon que la déformabilité de chacun des tronçons élastiques en flexion (22, 24) croisse de sa première extrémité respective (26, 30) à sa seconde extrémité respective (26, 32), et que les tronçons élastiques en flexion (22, 24) sont disposés de façon que, chaque fois, une extrémité déformable (28, 32) et une extrémité non déformable (26, 30) sont situées en face l'une de l'autre.

2. Dispositif selon la revendication 1, caractérisé en ce que les tronçons élastiques en flexion (22, 24) sont respectivement conçus sous forme de barreau ou sous forme de lame et que la première extrémité (26, 30) d'un tronçon élastique en flexion (22, 24) est chaque fois formée sur l'élément d'entraînement (10).

3. Dispositif selon la revendication 2, caractérisé en ce que les tronçons élastiques en flexion (22, 24) sont orientés parallèlement l'un à l'autre et que les secondes extrémités, libres, (28, 32) des tronçons élastiques en flexion (22, 24) s'étendent selon les directions respectivement opposées.

4. Dispositif selon l'une des revendications 1 à 3, caractérisé en ce que la fente de coulissement (12), formée par les tronçons élastiques en flexion (22, 24), est ouverte d'un côté.

5. Dispositif selon l'une des revendications précédentes, caractérisé en ce que l'élément d'entraînement (10) a la forme d'une plaque et que les tronçons élastiques en flexion sont disposés dans le plan de l'élément d'entraînement en forme de plaque (10).

6. Dispositif selon la revendication 5, caractérisé en ce que l'élément d'entraînement en forme de plaque (10) présente une découpe (14) dans laquelle un tronçon élastique en flexion (22, 24) pénètre depuis chacun des côtés opposés de la découpe, de sorte que les deux tronçons élastiques en flexion (22, 24) sont disposés à une certaine distance l'un de l'autre et sont parallèles, et en sens opposé, l'un à l'autre.

7. Dispositif selon la revendication 6, caractérisé en ce que la découpe (14) est disposée sur l'élément d'entraînement (10) conçu en tant que bras d'entraînement (76).

8. Dispositif selon l'une des revendications 1 à 4, caractérisé en ce que les tronçons élastiques en flexion (22, 24) s'étendent dans le plan formé par l'élément d'entraînement (10).

9. Dispositif selon la revendication 8, caractérisé en ce que sont disposés, selon la direction longitudinale (x-x) de la fente de coulissement (12), sur l'élément d'entraînement, le premier tronçon élastique en flexion (22), qui s'étend en s'écartant de l'élément d'entraînement (10), ainsi qu'un élément de paroi rigide (50) qui lui est orienté parallèlement, et qu'à l'extrémité, située du côté opposé à l'élément d'entraînement (10), de l'élément de paroi rigide s'étend le second tronçon élastique en flexion (24), qui est disposé parallèlement à, mais à une certaine distance de, l'élément de paroi, qui est orienté vers l'élément d'entraînement (10) et qui est situé en face du premier tronçon élastique en flexion (22), de sorte qu'entre les deux tronçons élastiques en flexion est formée la fente de coulissement (12).

10. Dispositif selon l'une des revendications 1 à 9, caractérisé en ce que l'élément d'entraînement (10) est un constituant d'un pont vibrant (18; 42; 60).

11. Dispositif selon la revendication 10, caractérisé en ce que le pont vibrant (18; 42; 60) est formé par au moins deux branches élastiques (20; 44; 58) et au moins un élément de base rigide (16; 40; 62) reliant les branches élastiques et que l'élément d'entraînement (10) est relié à l'élément de base rigide (16; 40; 62).

12. Dispositif selon la revendication 11, caractérisé en ce que l'élément d'entraînement (10) est disposé au centre entre les branches élastiques (20; 44).

13. Dispositif selon la revendication 11, caractérisé en ce que l'élément d'entraînement (10) est disposé d'un côté, à une extrémité de l'élément de base (62), à l'extérieur des branches élastiques (58).

14. Dispositif selon l'une des revendications précédentes, caractérisé par le fait que le ou les tronçons élastiques en flexion sont soutenus par un élément élastique.

15. Dispositif selon l'une des revendications précédentes, caractérisé en ce que les tronçons élastiques en flexion (22, 24) sont orientés de façon que la raideur en flexion croisse dans la zone d'accélération de la broche d'entraînement (8).
